# EUROPÄISCHE PATENTANMELDUNG

(11) **EP 0 980 816 A2**
(43) Veröffentlichungstag der Anmeldung: **23.02.2000**
(21) Anmeldenummer: 99113540.1
(22) Anmeldetag: 06.07.1999
(51) Int. Cl.: B62D 25/00, B62D 25/02

(54) **Karosseriebauteil für die Karosserie eines Kraftfahrzeugs**

(30) Priorität: 17.08.1998 DE 19837083
(71) Anmelder: Volkswagen Aktiengesellschaft, 38436 Wolfsburg (DE)
(72) Erfinder: Welsch, Frank, Dr., 38179 Schwülper (DE); Oehlerking, Conrad, Dipl.-Ing., 38527 Meine (DE)

(57) **Zusammenfassung**

Karosseriebauteil (2) für die Karosserie eines Kraftfahrzeuges, wobei das Karosseriebauteil (2) eine spezifische Form aufweist und aufgrund dieser spezifischen Form - bei Einwirkung einer Kraft - unterschiedliche Belastungs- bzw. Spannungszustände innerhalb verschiedener Bereiche (3, 4) des Karosseriebauteils (2) existieren, insbesondere in einem ersten Bereich (3) hohe und in einem zweiten Bereich (4) geringere Belastungs- bzw. Spannungszustände auftreten.

Eine Gewichtseinsparnis ist sehr kostengünstig dadurch realisiert und die Verringerung von Beschädigungen dadurch erreicht, daß in dem Bereich (4) des geringeren Belastungs- bzw. Spannungszustandes zur Reduzierung des Materials des Karosseriebauteils (2) mehrere Durchgangslöcher ausgebildet sind und die Durchgangslöcher im Bereich (4) des geringeren Belastungs- bzw. Spannungszustandes ein auf eine bestimmte Art und Weise ausgebildetes Lochbild bilden, so daß der in diesem Bereich (4) bei einer einwirkenden Kraft entstehende Belastungs- bzw. Spannungszustand im wesentlichen gleichmäßig ausgebildet ist.

## Beschreibung

Die Erfindung betrifft ein Karosseriebauteil für die Karosserie eines Kraftfahrzeugs, wobei das Karosseriebauteil eine spezifische Form aufweist und aufgrund dieser spezifischen Form - bei Einwirkung einer Kraft - unterschiedliche Belastungs- bzw. Spannungszustände innerhalb verschiedener Bereiche des Karosseriebauteils existieren, insbesondere in einem ersten Bereich hohe und in einem zweiten Bereich geringe Belastungs- bzw. Spannungszustände auftreten.

Im Stand der Technik, von dem die Erfindung ausgeht, sind Karosseriebauteile bekannt, die auf unterschiedliche Arten, zumeist auf der Basis von Metallplatinen durch Umformung hergestellt werden. Diese unterschiedlich ausgebildeten Karosseriebauteile weisen in Abhängigkeit des jeweiligen spezifischen Bauteils eine spezifische Form und eine entsprechende Materialdicke auf, damit sie die auf sie wirkenden Kräfte aufnehmen können. Die Materialdicke jedes spezifischen Karosseriebauteils kann in unterschiedlichen Bereichen des Karosseriebauteils in Abhängigkeit der hier auftretenden Belastungs- bzw. Spannungszustände unterschiedlich ausgebildet sein. So ist in Bereichen mit hohen Belastungs- bzw. Spannungszuständen auch eine weitaus größere Materialdicke vorgesehen als in Bereichen mit geringeren Belastungs- bzw. Spannungszuständen.

Es ist, insbesondere außerhalb der Kraftfahrzeugtechnik bekannt, vorzugsweise flächig ausgebildete Bauteile, die in unterschiedlichen Bereichen eine unterschiedliche Materialdicke aufweisen, mit Hilfe der 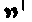 tailored-blank-Technik" herzustellen, insbesondere um Gewichtseinsparungen zu realisieren. Hierbei werden verschiedene Metallelemente, die zumeist als Metallplatinen ausgeführt sind und unterschiedliche Gefügestrukturen und Blechdicken aufweisen, derartig miteinander verbunden, daß ein Bauteil mit der jeweiligen spezifischen Form entsteht und in entsprechend unterschiedlichen Bereichen - aufgrund der verwendeten unterschiedlichen Metallplatinen mit unterschiedlicher Blechdicke - eine unterschiedliche Wandstärke bzw. Materialdicke existiert. Zusätzlich können Bauteile mit unterschiedlichen Wandstärken auch im aufwendigen Druckgußverfahren hergestellt werden.

Weiterhin sind im Stand der Technik separat anzuordnende Strukturelemente bekannt (EP 0 633 182 A1), die als Lochbleche oder Stahlgitter ausgeführt sind und insbesondere an den Innenseiten von Fahrzeugtüren oder Fahrzeughauben befestigt werden, um die mechanische Festigkeit bzw. Steifigkeit einer Fahrzeugtüre zu erhöhen. Diese Strukturelemente werden auf die entsprechenden Bereiche einer Fahrzeugtüre aufgeklebt oder mit dem Blech der Fahrzeugtüre durch Kaltverformung verbunden.

Weiterer Stand der Technik ist aus der DE-PS 574 777 und aus der DE-PS 692 243 bekannt.

Die bisher bekannten Verfahren oder die Herstellung der entsprechenden spezifischen Bauteile, insbesondere durch die 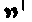 tailored-blank-Technik" sind insbesondere je nach Art des herzustellenden spezifischen Bauteils unter anderem sehr aufwendig, da ein dünnes Blech lokal aufgedickt werden muß. Folglich sind die auf diese Art und Weise hergestellten Bauteile äußerst kostenintensiv. Weiterhin ist nachteilig, daß zwar in dem Bereich eines geringeren Belastungs- bzw. Spannungszustands eine entsprechend geringe Materialdicke ausgebildet ist, aber durch die konstant gering ausgebildete Materialdicke nicht immer gewährleistet ist, daß der in diesem Bereich bei einer einwirkenden Kraft entstehende Belastungs- bzw. Spannungszustand auch im wesentlichen gleichmäßig verläuft, da dies von verschiedenen Faktoren wie Krafteinleitungspunkt, spezifische Form dieses Bereichs, Gefügestruktur des Metalls etc., abhängig ist. Ein nicht gleichmäßig verlaufender Belastungs- bzw. Spannungszustand in dem Bereich, wo sowieso bereits eine geringere Materialdicke existent ist, kann insbesondere über einen längeren Belastungszeitraum zu Rissen, Dehnungen oder gar zur Zerstörung bzw. zur Beschädigung dieses Bereichs führen. Im Ergebnis bleibt daher festzuhalten, daß die Herstellung solcher Bauteile einerseits sehr kostenintensiv, andererseits nicht immer optimal ist.

Der Erfindung liegt daher die Aufgabe zugrunde, ein Karosseriebauteil der eingangs genannten Art derart auszugestalten und weiterzubilden, daß eine optimale Gewichteinsparung ermöglicht ist, wobei die Kosten und die 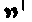 Beschädigungsanfälligkeit" verringert sind.

Die zuvor aufgezeigte Aufgabe ist nun dadurch gelöst, daß in dem Bereich des geringeren Belastungs- bzw. Spannungszustands zur Reduzierung des Materials des Karosseriebauteils mehrere Durchgangslöcher ausgebildet sind und die Durchgangslöcher im Bereich des geringeren Belastungs- bzw. Spannungszustands ein auf eine bestimmte Art und Weise ausgebildetes Lochbild bilden, so daß der in diesem Bereich bei einer einwirkenden Kraft entstehende Belastungs- bzw. Spannungszustand im wesentlichen gleichmäßig ausgebildet ist. Durch die Realisierung eines derartig ausgebildeten Karosseriebauteils ist einerseits eine Verringerung der Kosten gewährleistet, da entsprechende Durchgangslöcher sehr kostengünstig herstellbar sind, andererseits in dem Bereich des geringeren Belastungs- bzw. Spannungszustands ein bei einer einwirkenden Kraft entstehender, im wesentlichen gleichmäßig ausgebildeter Belastungs- bzw. Spannungszustand existiert, da durch die Art und Weise des Lochbilds dieser gleichmäßige Belastungs- bzw. Spannungszustand ermöglicht wird. Aufgrund der hier erreichten gleichmäßigen Ausbildung dieses Belastungszustands kommt es weniger zu Rissen und/oder Beschädigungen, auch nicht über eine längere Belastungsdauer, so daß die 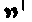 Beschädigungsanfälligkeit" ebenfalls verringert ist. Im Ergebnis ist ein Karosseriebauteil realisiert, das die erforderliche Gewichtseinsparung - aufgrund der ausgebildeten Durchgangslöcher - realisiert, wobei das Karosseriebauteil kostengünstig ist und dessen Beschädigungsanfälligkeit minimiert ist.

Es gibt nun eine Vielzahl von Möglichkeiten, das erfindungsgemäße Karosseriebauteil in vorteilhafter Weise auszugestalten und weiterzubilden. Hierfür darf an dieser Stelle auf die dem Patentanspruch 1 nachgeordneten Patentansprüche verwiesen werden. Im übrigen werden nun mehrere bevorzugte Ausführungsformen der Erfindung anhand einer Zeichnung näher erläutert. In der Zeichnung zeigt
- Fig. 1: eine Metallplatine im ungeformten Zustand für ein als vorderer Dachquerträger ausgebildetes Karosseriebauteil in einer schematischen Darstellung von vorne,
- Fig. 2: eine Metallplatine im ungeformten Zustand für ein als hinterer Dachquerträger ausgebildetes Karosseriebauteil in einer schematischen Darstellung von vorne, und
- Fig. 3: eine Metallplatine im ungeformten Zustand für ein als innerer Querträger ausgebildetes Karosseriebauteil in einer schematischen Darstellung von vorne.

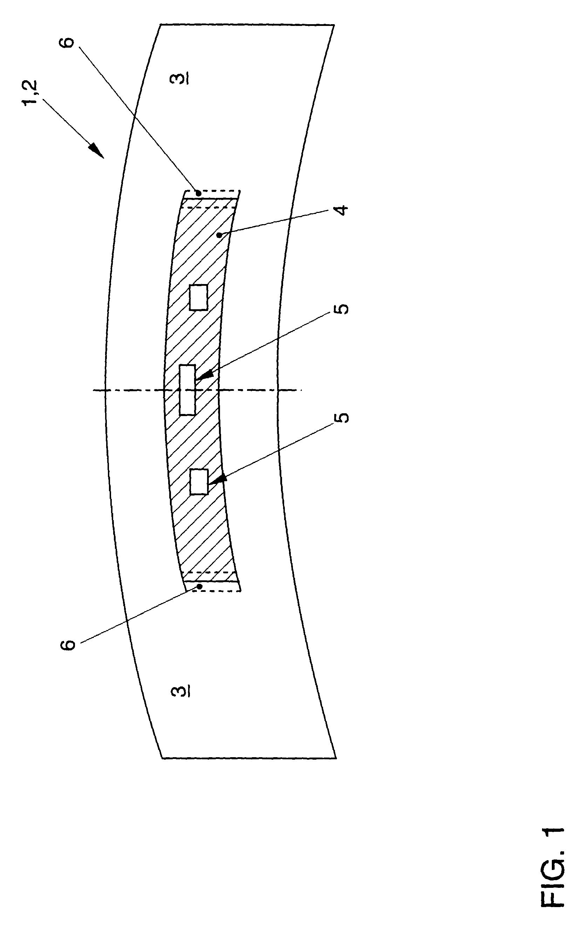

Die Fig. 1 bis 3 zeigen Metallplatinen 1 im noch ungeformten Zustand für verschiedene Karosseriebauteile 2 für die Karosserie eines Kraftfahrzeugs. Das durch die jeweilige Metallplatine 1 - im Endeffekt - hergestellte Karosseriebauteil 2 weist eine spezifische Form auf, wobei aufgrund dieser spezifischen Form - bei Einwirkung einer Kraft - innerhalb verschiedener Bereiche 3 und 4 des Karosseriebauteils 2 unterschiedliche Belastungs- bzw. Spannungszustände existieren, nämlich in einem ersten Bereich 3 hohe und in einem zweiten Bereich 4 geringe Belastungs- bzw. Spannungszustände auftreten. Die in den Fig. 1 bis 3 mit den Bezugszeichen 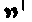 3" und 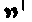 4" innerhalb der noch ungeformten Metallplatine 1 bezeichneten Bereiche bilden im späteren umgeformten Zustand der entsprechenden Metallplatinen 1, also dann, wenn das fertige Karosseriebauteil 2 die jeweilige spezifische Form aufweist, den Bereich 3, in dem hohe und den Bereich 4, in dem geringe Belastungs- bzw. Spannungszustände auftreten.

Die oben beschriebenen Nachteile werden nun dadurch vermieden, d.h. eine Gewichtsreduzierung wird auf kostengünstige Weise dadurch erzielt und die 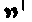 Beschädigungsanfälligkeit" des Bereichs 4 mit dem geringen Belastungs- bzw. Spannungzustand wird nun dadurch minimiert, daß in dem Bereich 4 des geringeren Belastungs- bzw. Spannungszustands zur Reduzierung des Materials des Karosseriebauteils 2 mehrere Durchgangslöcher ausgebildet sind und die Durchgangslöcher im Bereich 4 des geringeren Belastungs- bzw. Spannungszustands ein auf eine bestimmte Art und Weise ausgebildetes Lochbild bilden, so daß der in diesem Bereich 4 bei einer einwirkenden Kraft entstehende Belastungs- bzw. Spannungszustand im wesentlichen gleichmäßig ausgebildet ist.

Obwohl die in den Fig. 1 bis 3 dargestellten Metallplatinen 1 keine explizit dargestellten und näher bezeichneten Durchgangslöcher, sondern im wesentlichen nur einen schraffierten Bereich 4 zeigen, in dem der entsprechend geringe Belastungs- bzw. Spannungszustand bei Einwirkung der entsprechenden Kraft auftritt, also den Bereich 4 zeigen, in dem die Durchgangslöcher vorgesehen sind, und im folgenden zur Anordnung und Ausbildung dieser Durchgangslöcher sowie des durch diese Durchgangslöcher bestimmten Lochbildes noch näher eingegangen werden wird, soll im folgenden noch auf grundsätzliche Vorteile, die durch die Ausbildung eines derartigen entsprechenden Lochbildes erreichbar sind, eingegangen werden.

Zunächst kann durch eine entsprechende Ausbildung bzw. Realisierung des Lochbildes ein gleitender Übergang von einem Bereich 3 des höheren Belastungs- bzw. Spannungszustands zu dem Bereich 4 des geringeren Belastungs- bzw. Spannungszustands ausgebildet werden. Hierbei weist das Karosseriebauteil 2 überall eine im wesentlichen gleiche Materialdicke auf und ist aus Metall, nämlich aus den in den Fig. 1 bis 3 dargestellten Metallplatinen 1, vzw. durch ein Kalt-Umformverfahren hergestellt.

Damit der bei einer einwirkenden Kraft in dem Bereich 4 entstehende Belastungs- bzw. Spannungszustand im wesentlichen gleichmäßig ausgebildet ist, ist der Durchmesser der im wesentlichen rund ausgeführten Durchgangslöcher und der Lochabstand der Durchgangslöcher zueinander an den in diesem Bereich auftretenden Belastungs- bzw. Spannungszustand 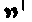 angepaßt".

Aufgrund der Flexibilität, d.h. der Ausbildung möglicher unterschiedlicher 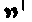 Lochbilder" bzw. durch die Realisierung zusätzlicher Durchgangslöcher im Übergangsbereich (der mit dem Bezugszeichen 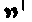 6" bezeichnet ist) vom Bereich 3 des höheren zum Bereich 4 des geringeren Belastungs- bzw. Spannungzustands und die Variation der Lochdichte (gelochte Fläche/Gesamtfläche) des Lochbilds in diesem Übergangsbereich 6 im Verhältnis zur Lochdichte des Lochbildes des den geringeren Belastungs- bzw. Spannungszustands aufweisenden Bereichs 4 kann nun - je nach Wunsch bzw. Ausbildung des jeweiligen spezifischen Karosseriebauteils 2 - ein gleitender Übergang oder auch ein stufenweiser Übergang ausgebildet werden.

Fig. 1 zeigt eine noch ungeformte Metallplatine 1, die zu einem als vorderer Dachquerträger ausgebildeten Karosseriebauteil 2 für eine Fahrzeugkarosserie entsprechend umgeformt wird. Gut zu erkennen ist, daß die hier dargestellte Metallplatine 1 gekrümmt dargestellt ist. Die hier dargestellte Metallplatine 1 weist vzw. eine Breite von 280 mm und eine Länge von 1210 mm auf, wobei der hier schraffiert dargestellte Bereich den Bereich 4 des geringeren Belastungs- bzw. Spannungszustands darstellt. Gut zu erkennen ist, daß innerhalb dieses schraffiert dargestellten Bereichs 4 weitere Ausnehmungen 5 vorgesehen sind, so daß hier im späteren umgeformten Zustand der Metallplatine 1, also dann, wenn die hier dargestellte Metallplatine 1 zu dem vorderen Dachquerträger ausgebildet ist, andere Elemente anordenbar sind. Der Durchmesser der hier nicht explizit dargestellten Durchgangslöcher beträgt zwischen 3 und 5 mm, vzw. 4 mm, wobei die Durchgangslöcher in versetzt zueinander verlaufenden Reihen vorgesehen sind. Der Lochabstand der in einer Reihe vorgesehenen benachbarten Durchgangslöcher, d.h. der Abstand von der Mitte eines Durchgangslochs zur Mitte des in dieser Reihe benachbarten Durchgangslochs beträgt 4 bis 10 mm, vorzugsweise 7 mm. Die Dicke der hier dargestellten Metallplatine 1, die auch als Grundplatine bezeichenbar ist, beträgt 1,0 mm. Bei der hier dargestellten Metallplatine 1 bzw. Grundplatine (FePO4) handelt es sich um ein feuerverzinktes Stahlblech mit Bogenschnitt, wobei dieser 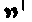 Bogenschnitt" auch das Lochbild bzw. der schraffierte Bereich 4 aufweist. Durch das entsprechend ausgebildete Lochbild ist in diesem Bereich 4 eine Materialverringerung zwischen 22,5 bis 30 % realisierbar. Wenn in der bevorzugten Ausführungsform der Durchmesser der Durchgangslöcher 4 mm und der Lochabstand 7 mm beträgt, werden ca. 30 % des Materials herausgelocht, was einer äquivalenten Blechdicke, d.h. Dicke der Metallplatine 1 von 0,7 mm im Bereich 4 entspricht. Wie bereits oben erwähnt, ist das Lochbild durch Ausnehmungen 5, die für die Befestigung von Sonnenblenden vorgesehen sind, unterbrochen. Bei dem aus dieser Metallplatine 1 hergestellten vorderen Dachquerträger ergibt sich eine Gewichtseinsparung von ca. 75 g (7 %), wobei hier durch die mögliche unterschiedliche Ausbildung der Lochbilder eine Gewichtseinsparung von 5 bis 10 % möglich ist. Gut zu erkennen ist auch der hier gestrichelt angedeutete Übergangsbereich 6, also der Übergang des Bereichs 3 mit hohen Belastungs- bzw. Spannungszuständen zu dem Bereich 4 mit geringen Belastungs- bzw. Spannungszuständen, wobei hier das Lochbild 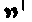 ausläuft", bzw. hier die Lochdichte entsprechend variiert um einen entsprechenden vzw. gleitenden Übergang der entsprechenden Spannungen zu gewährleisten.

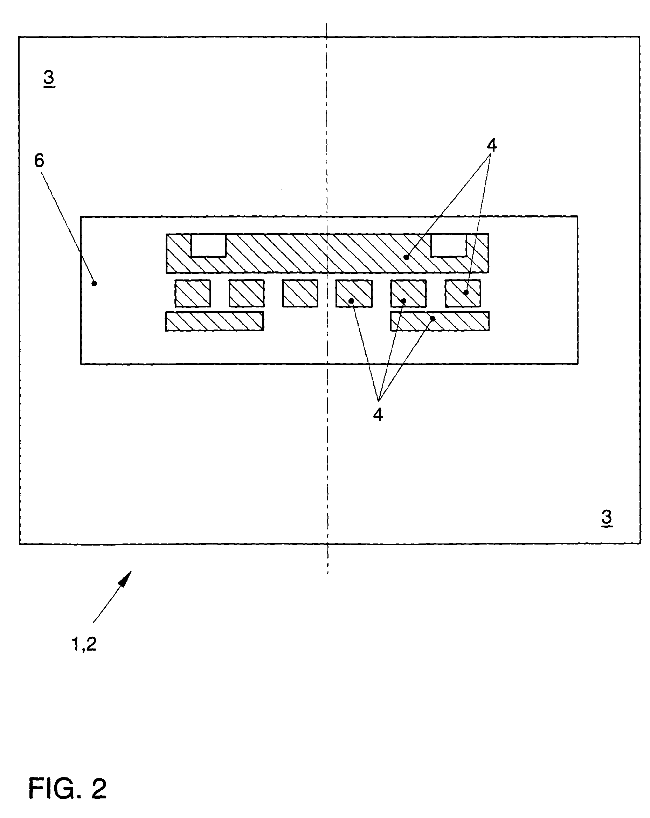

Fig. 2 zeigt nun eine Metallplatine 1 aus der im späteren umgeformten Zustand ein hinterer Dachquerträger als Karosseriebauteil 2 für eine Fahrzeugkarosserie ausgebildet wird. Die hier im ungeformten Zustand gezeigte Metallplatine 1 weist mehrere Bereiche 4 mit geringeren Belastungs- bzw. Spannungszuständen auf, die hier auch schraffiert dargestellt sind. Vzw. ist die hier gezeigte Metallplatine 1 beidseitig verzinkt und weist eine Länge von 1100 mm und eine Breite von 900 mm auf. Der Durchmesser der in dem schraffierten Bereich 4 vorgesehenen, nicht explizit dargestellten Durchgangslöcher beträgt 3,5 oder 4 mm, wobei die Durchgangslöcher wiederum in versetzt zueinander verlaufenden Reihen vorgesehen sind. Vzw. bedeutet - wie auch bei der Fig. 1 - der Ausdruck 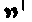 in versetzt zueinander verlaufenden Reihen angeordnet" daß ein Durchgangsloch einer benachbarten Reihe im wesentlichen in der - seitlich versetzten - Mitte zwischen zwei benachbarten Durchgangslöchern einer anderen Reihe angeordnet ist. Der Lochabstand der hier in einer Reihe vorgesehenen benachbarten Durchgangslöcher beträgt vzw., wenn die Durchgangslöcher einen Durchmesser von 3,5 mm aufweisen, 6 mm und, wenn die Durchgangslöcher einen Durchmesser von 4 mm aufweisen, 7 oder 8 mm. Die in der Fig. 2 dargestellte Grundplatine bzw. Metallplatine 1 weist eine Dicke von 0,8 mm auf. Durch das entsprechend ausgebildete Lochbild, wie oben beschrieben, ist in diesem Bereich 4 eine Materialverringerung zwischen 22,5 bis 30,5 % realisierbar. Bei einem Lochdurchmesser der Durchgangslöcher von 4 mm sowie einem Lochabstand von 8 mm ergibt sich für den Bereich 4 eine äquivalente Blechdicke von ca. 0,6 mm, wobei eine Gewichtseinsparung von ca. 100 g (ca. 7 %) erreicht wird.

Es ist auch denkbar, daß ein Karosseriebauteil 2 hergestellt wird, das als eine Stegblech-Schweller ausgebildet ist, also als ein Karosseriebauteil für den unteren Türbereich, was hier jedoch nicht dargestellt ist. Für den Fall, daß das Karosseriebauteil 2 als Stegblech-Schweller ausgebildet ist, beträgt der Durchmesser der Durchgangslöcher 4 mm, wobei die Durchgangslöcher wiederum in versetzt zueinander verlaufenden Reihen vorgesehen sind. Hierbei beträgt der Lochabstand der in einer Reihe vorgesehenen benachbarten Durchgangslöcher vzw. 8 mm und die Dicke der Grundplatine bzw. der hier nicht dargestellten Metallplatine 0,8 mm. Durch das derart entsprechend ausgebildete Lochbild ist in dem Bereich des geringeren Belastungs- bzw. Spannungszustands eine Materialverringerung um ca. 22,5 % realisierbar, was einer Gewichtseinsparung von ca. 350 g und einer äquivalenten Blechdicke in diesem Bereich von ca. 0,6 mm entspricht (Gewichtseinsparung ca. 9 %).

Denkbar ist, daß auch die Form der Durchgangslöcher variiert, beispielsweise sechseckige Durchgangslöcher ausgebildet werden. Auch ist denkbar, daß Karosseriebauteile 2 ausgebildet werden, die hier nicht explizit beschrieben sind, beispielsweise Sitzquerträger, Abstützungen für Dichtkanäle, Querträger zwischen den hinteren Radkästen, Innenausstattungsteile oder dergleichen. Vzw. werden die Durchgangslöcher mit einer an sich bekannten Technik durch Zuhilfenahme eines Lochstempels und einer Matritze entsprechend ausgebildet. Vzw. wird bei der Ausbildung des Lochbilds immer versucht, ein annähernd homogenes Lochbild auszubilden, damit eine gleichmäßige Belastungsverteilung erreicht werden kann.

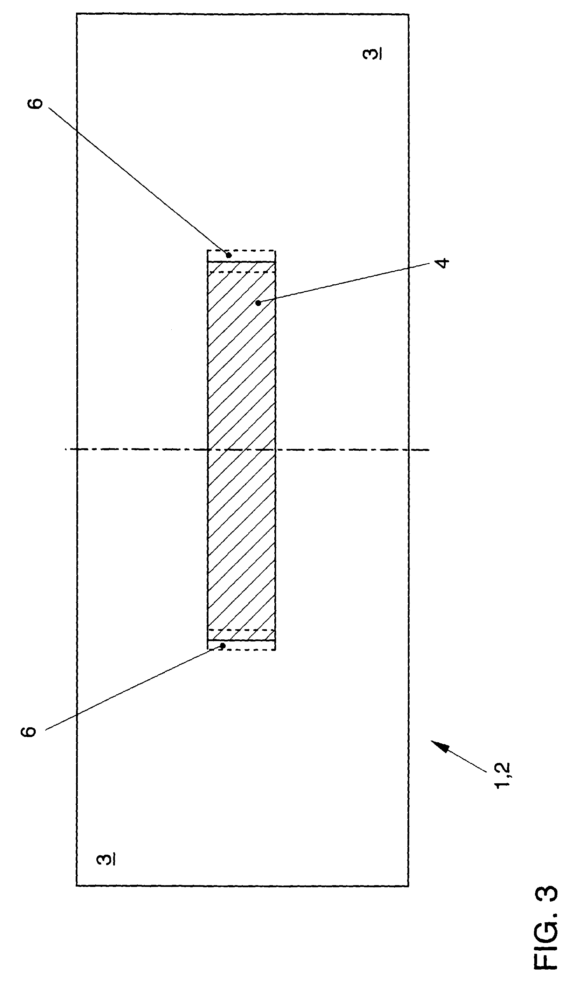

Fig. 3 schließlich zeigt eine Metallplatine 1, die zu einem Karosseriebauteil 2 ausgebildet werden kann, das als bei einer Fahrzeugkarosserie anordenbarer innerer Querträger ausgebildet ist. Vzw. weist die hier dargestellte Metallplatine 1 eine Breite von 600 mm und eine Länge von 1600 mm auf Auch hier bezeichnet der schraffiert dargestellte Bereich 4 den Bereich, wo die im späteren umgeformten Zustand der Metallplatine 1 geringere Belastungs- bzw. Spannungszustände auftreten. Der Durchmesser der hier nicht explizit dargestellten Durchgangslöcher beträgt 3,5 oder 4 mm, wobei die Durchgangslöcher wiederum in versetzt zueinander verlaufenden Reihen vorgesehen sind. Der Lochabstand der in einer Reihe vorgesehenen benachbarten Durchgangslöcher beträgt 5,5 mm, wenn der Durchmesser der Durchgangslöcher 3,5 mm ist, und 7 mm, wenn der Durchmesser der Durchgangslöcher 4 m beträgt. Die Dicke der hier dargestellten Metallplatine 1, die wiederum als Grundplatine bezeichenbar ist, beträgt 2 mm. Wiederum ist der Übergangsbereich 6 erkennbar, wo das Lochbild 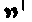 ausläuft", da dieser Bereich hier wiederum gestrichelt dargestellt ist. Durch das hier entsprechend ausgebildete Lochbild ist in dem Bereich 4 eine Materialverringerung zwischen 36 bis 42 % realisierbar.

## Patentansprüche

1. Karosseriebauteil (2) für die Karosserie eines Kraftfahrzeuges, wobei das Karosseriebauteil (2) eine spezifische Form aufweist und aufgrund dieser spezifischen Form - bei Einwirkung einer Kraft - unterschiedliche Belastungs- bzw. Spannungszustände innerhalb verschiedener Bereiche (3, 4) des Karosseriebauteils (2) existieren, insbesondere in einem ersten Bereich (3) hohe und in einem zweiten Bereich (4) geringere Belastungs- bzw. Spannungszustände auftreten, **dadurch gekennzeichnet**, daß in dem Bereich (4) des geringeren Belastungs- bzw. Spannungszustandes zur Reduzierung des Materials des Karosseriebauteils (2) mehrere Durchgangslöcher ausgebildet sind und die Durchgangslöcher im Bereich (4) des geringeren Belastungs- bzw. Spannungszustandes ein auf eine bestimmte Art und Weise ausgebildetes Lochbild bilden, so daß der in diesem Bereich (4) bei einer einwirkenden Kraft entstehende Belastungs- bzw. Spannungszustand im wesentlichen gleichmäßig ausgebildet ist.

2. Karosseriebauteil nach dem vorhergehenden Anspruch, **dadurch gekennzeichnet**, daß durch das Lochbild ein gleitender Übergang von einem Bereich (3) des hohen Belastungs- bzw. Spannungszustandes zu dem Bereich (4) des geringeren Belastungs- bzw. Spannungszustandes ausbildbar ist.

3. Karosseriebauteil nach einem der vorhergehenden Ansprüche, **dadurch gekennzeichnet**, daß das Karosseriebauteil (2) überall eine im wesentlichen gleiche Materialdicke aufweist.

4. Karosseriebauteil nach einem der vorhergehenden Ansprüche, **dadurch gekennzeichnet**, daß das Karosseriebauteil (2) aus Metall, insbesondere aus Metallplatinen (1) hergestellt ist.

5. Karosseriebauteil nach einem der vorhergehenden Ansprüche, **dadurch gekennzeichnet**, daß der Durchmesser der im wesentlichen rund ausgeführten Durchgangslöcher und der Lochabstand der Durchgangslöcher zueinander an den in diesem Bereich (4) auftretenden Belastungs- bzw. Spannungszustand angepaßt ist.

6. Karosseriebauteil nach einem der vorhergehenden Ansprüche, **dadurch gekennzeichnet**, daß zusätzlich Durchgangslöcher im Übergangsbereich (6) vom Bereich (3) des hohen zum Bereich (4) des geringeren Belastungs- bzw. Spannungszustandes vorgesehen sind und die Lochdichte des Lochbildes im Übergangsbereich (6) im Verhältnis zur Lochdichte des Lochbildes des den geringeren Belastungs- bzw. Spannungszustandes aufweisenden Bereichs (4) variiert, um einen gleitenden Übergang auszubilden.

7. Karosseriebauteil nach einem der vorhergehenden Ansprüche, **dadurch gekennzeichnet**, daß zusätzlich Durchgangslöcher im Übergangsbereich (6) vom Bereich (3) des hohen zum Bereich (4) des geringeren Belastungs- bzw. Spannungszustandes vorgesehen sind und die Lochdichte des Lochbildes im Übergangsbereich (6) im Verhältnis zur Lochdichte des Lochbildes des den geringeren Belastungs- bzw. Spannungszustandes aufweisenden Bereichs (4) variiert, um einen stufenweisen Übergang auszubilden.

8. Karosseriebauteil nach einem der vorhergehenden Ansprüche, **dadurch gekennzeichnet**, daß das Karosseriebauteil (2) als bei einer Fahrzeugkarosserie anordenbarer vorderer Dachquerträger ausgebildet ist.

9. Karosseriebauteil nach Anspruch 8, **dadurch gekennzeichnet**, daß der Durchmesser der Durchgangslöcher zwischen 3 bis 5 mm, vzw. 4 mm beträgt.

10. Karosseriebauteil nach Anspruch 8 oder 9, **dadurch gekennzeichnet**, daß die Durchgangslöcher in versetzt zueinander verlaufenden Reihen vorgesehen sind.

11. Karosseriebauteil nach einem der Ansprüche 8 bis 10, **dadurch gekennzeichnet**, daß der Lochabstand der in einer Reihe vorgesehenen benachbarten Durchgangslöcher 4 bis 10 mm, vzw. 7 mm beträgt.

12. Karosseriebauteil nach einem der Ansprüche 8 bis 11, **dadurch gekennzeichnet**, daß die Dicke der Grundplatine 1,0 mm beträgt.

13. Karosseriebauteil nach den Ansprüchen 8 bis 12, **dadurch gekennzeichnet**, daß durch das entsprechend ausgebildete Lochbild in diesem Bereich (4) eine Materialverringerung zwischen 22,5 bis 30 % realisierbar ist.

14. Karosseriebauteil nach einem der Ansprüche 1 bis 7, **dadurch gekennzeichnet**, daß das Karosseriebauteil (2) als bei einer Fahrzeugkarosserie anordenbarer hinterer Dachquerträger ausgebildet ist.

15. Karosseriebauteil nach Anspruch 14, **dadurch gekennzeichnet**, daß der Durchmesser der Durchgangslöcher 3,5 oder 4 mm beträgt.

16. Karosseriebauteil nach Anspruch 14 oder 15, **dadurch gekennzeichnet**, daß die Durchgangslöcher in versetzt zueinander verlaufenden Reihen vorgesehen sind.

17. Karosseriebauteil nach einem der Ansprüche 14 bis 16, **dadurch gekennzeichnet**, daß der Lochabstand der in einer Reihe vorgesehenen benachbarten Durchgangslöcher von 3,5 mm Durchmesser 6 mm beträgt.

18. Karosseriebauteil nach einem der Ansprüche 14 bis 16, **dadurch gekennzeichnet**, daß der Lochabstand der in einer Reihe vorgesehenen benachbarten Durchgangslöcher von 4 mm Durchmesser 7 oder 8 mm beträgt.

19. Karosseriebauteil nach einem der Ansprüche 14 bis 18, **dadurch gekennzeichnet**, daß die Dicke der Grundplatine 0,8 mm beträgt.

20. Karosseriebauteil nach einem der Ansprüche 14 bis 19, **dadurch gekennzeichnet**, daß durch das entsprechend ausgebildete Lochbild in diesem Bereich (4) eine Materialverringerung zwischen 22,5 bis 30,5 % realisierbar ist.

21. Karosseriebauteil nach einem der Ansprüche 1 bis 7, **dadurch gekennzeichnet**, daß das Karosseriebauteil (2) als bei einer Fahrzeugkarosserie anordenbarer Stegblech-Schweller ausgebildet ist.

22. Karosseriebauteil nach Anspruch 21, **dadurch gekennzeichnet**, daß der Durchmesser der Durchgangslöcher 4 mm beträgt.

23. Karosseriebauteil nach Anspruch 21 oder 22, **dadurch gekennzeichnet**, daß die Durchgangslöcher in versetzt zueinander verlaufenden Reihen vorgesehen sind.

24. Karosseriebauteil nach einem der Ansprüche 21 bis 23, **dadurch gekennzeichnet**, daß der Lochabstand der in einer Reihe vorgesehenen benachbarten Durchgangslöcher 8 mm beträgt.

25. Karosseriebauteil nach einem der Ansprüche 21 bis 24, **dadurch gekennzeichnet**, daß die Dicke der Grundplatine 0,8 mm beträgt.

26. Karosseriebauteil nach den Ansprüchen 21 bis 25, **dadurch gekennzeichnet**, daß durch das entsprechend ausgebildete Lochbild in diesem Bereich (4) eine Materialverringerung um 22,5 % realisierbar ist.

27. Karosseriebauteil nach einem der Ansprüche 1 bis 7, **dadurch gekennzeichnet**, daß das Karosseriebauteil (2) als bei einer Fahrzeugkarosserie anordenbarer innerer Querträger ausgebildet ist.

28. Karosseriebauteil nach Anspruch 27, **dadurch gekennzeichnet**, daß der Durchmesser der Durchgangslöcher 3,5 oder 4 mm beträgt.

29. Karosseriebauteil nach Anspruch 27 oder 28, **dadurch gekennzeichnet**, daß die Durchgangslöcher in versetzt zueinander verlaufenden Reihen vorgesehen sind.

30. Karosseriebauteil nach einem der Ansprüche 27 bis 29, **dadurch gekennzeichnet**, daß der Lochabstand der in einer Reihe vorgesehenen benachbarten Durchgangslöcher von 3,5 mm Durchmesser 5,5 mm beträgt.

31. Karosseriebauteil nach einem der Ansprüche 27 bis 29, **dadurch gekennzeichnet**, daß der Lochabstand der in einer Reihe vorgesehenen benachbarten Durchgangslöcher von 4 mm Durchmesser 7 mm beträgt.

32. Karosseriebauteil nach einem der Ansprüche 27 bis 31, **dadurch gekennzeichnet**, daß die Dicke der Grundplatine 2 mm beträgt.

33. Karosseriebauteil nach einem der Ansprüche 27 bis 32, **dadurch gekennzeichnet**, daß durch das entsprechend ausgebildete Lochbild in diesem Bereich (4) eine Materialverringerung zwischen 36 bis 42 % realisierbar ist.
